# EUROPEAN PATENT SPECIFICATION

(11) **EP 1 768 523 B1**
(45) Date of publication and mention of the grant of the patent: **02.01.2008**
(21) Application number: 05759134.9
(22) Date of filing: 12.07.2005
(51) Int. Cl.: A47D 5/00, G01G 19/44

(54) **BABY CHANGING TOP WITH WEIGHING SYSTEM**
WICKELAUFSATZ MIT WIEGESYSTEM
MATELAS A LANGER A BALANCE INTEGREE

(30) Priority: 13.07.2004 ES 200401703 U
(43) Date of publication of application: 04.04.2007
(73) Proprietor: Bebe Due España, S.A., 08130 Barcelona (ES)
(72) Inventor: FOLCH MOLINS, Liberto, ES-08130 Barcelona (ES)
(74) Representative: Thurgood, Alexander John
(86) International application number: PCT/IB2005/001954
(87) International publication number: WO 2006/008608

(56) References cited:
- DE-U1- 9 103 415
- FR-A- 2 708 343
- US-A- 4 038 973
- US-A- 4 339 012
- US-B1- 6 377 177

## Description

### Object of the invention

The present invention refers to a changing top for babies with a weighing system (see document US-B-6 377 177).

### Background to the invention

At the present time we are familiar with changing tops for babies that consist of a padded portion, in some cases with lateral flarings defining a central recessed area, and which are set in place as a kind of cover for cabinet or scissor type baths, or else on any type of secure flat surface as well.

These changing tops are used daily for dressing the baby, especially after bathing it, and they fulfil no other purpose.

Otherwise, since checking the baby's weight provides one of the most important facts and an indicator for monitoring its normal development, it is wise to do this every day. At present, this is no easy matter and the results are not accurate, because it normally entails a visit to a pharmacy, where the baby is weighed with its clothe on. This drawback is overcome by use of the changing top of the invention.

### Description of the invention

The changing top of the invention has the optimum configuration to enable the baby's daily weight check to be performed simply, without clothes, and taking advantage of the time when it is either dressed or undressed, at bath time for instance.

In accordance with the invention, the changing top is made up of a padded material portion and may preferably have a central area recessed in relation to the enlarged side sections, in order to provide the baby with a certain lateral restraint.

The changing top is fitted with a digital weight measuring system, consisting of sensors, a weight measurement display, a switch, an electronic operating system, and a compartment with a cover for the power supply batteries.

The padded material portion may include a bearing support to endow it with the necessary rigidity, or else it may rest directly on a consistent horizontal surface with no bearing support.

In this way, when dressing or undressing the baby every day, the changing top weighing system may be switched on in order to ascertain its weight unclothed, in a simple fashion.

### Brief description of the drawings

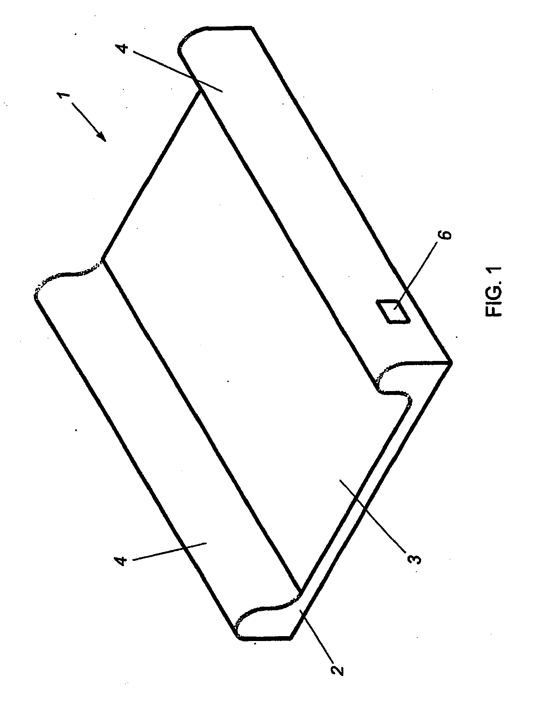

Figure 1 shows a view of the changing top of the invention.

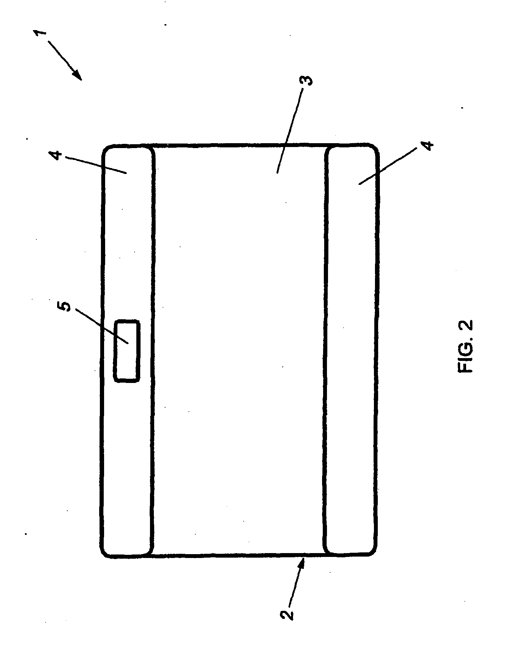

Figure 2 shows an overhead plan view of the changing top of the invention.

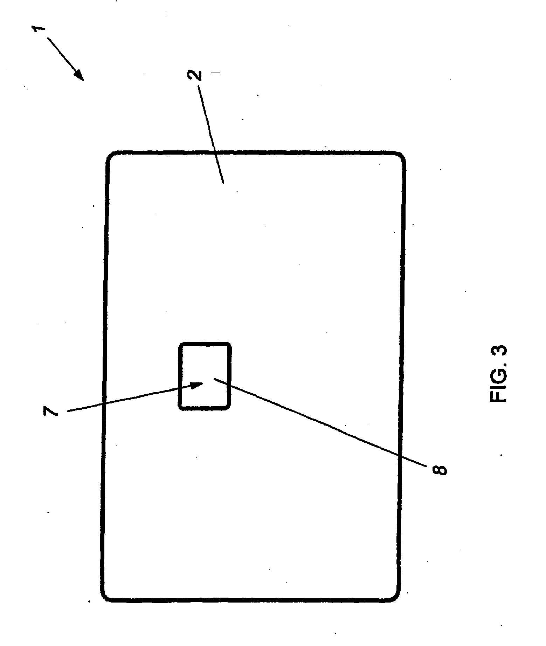

Figure 3 shows a bottom plan view of the changing top of the invention.

### Description of a practical embodiment of the invention

The changing top 1 of the invention is made up of a portion 2 of padded material, preferably polyurethane with a PVC cover, with a central area 3 recessed in respect of two parallel side sections 4, enlarged so as to provide the baby with a certain lateral support.

Portion 2 is provided with a digital weight measuring system, with internal sensors, not depicted, so as to show the baby's weight while being changed on a small display 5 located in one of the side sections 4. One of the same sections 4 also houses a switch 6 which shuts off the power supply to the weighing system when its use is not required.

The lower part of portion 2 has a compartment 7 with a cover 8 for the batteries that power the weighing system. This section will also preferably house the weighing system electronics, not shown.

Now that an adequate description has been given of the nature of the invention and of the way that it may be embodied in practice, it should be pointed out that the layouts described above and shown in the adjoining drawings are open to detail modifications, insofar as they do not alter the essential principle.

## Claims

1. Baby changing top (1) with weighing system, consisting of a portion (2) of padded material, in particular with a central area (3) recessed in relation to enlarged side sections (4), **characterised in that** the padded portion (2) is provided with a digital weight measuring system consisting of sensors, a weight measurement display (5), a switch (6), an electronic operating system, and a compartment (7) with a cover (8) for the power supply batteries.

2. Changing top according to claim 1, **characterise** in that the display (5) and/or the switch (6) are installed in one or more of the enlarged side sections (4) of the padded portion (2).

3. Changing top according to claim 1, **characterised in that** the battery compartment cover (8) is accessible from the bottom of the padded portion (2).

4. Changing top according to claim 1, **characterise** in that the padded material portion (2) incorporates a bearing support.

## Patentansprüche

1. Wickelauflage für Babys (1) mit Wiegesystem sowie einem Bestandteil (2) gepolsterten Materials gebildeten, insbesondere mit einem abgesenkten Mittelbereich (3) in Bezug auf einige dickere Seitenteile (4); **dadurch gekennzeichnet, dass** in dem Bestandteil (2) ein Digitalsystem zur Messung des Gewichts vorgesehen ist, das aus einigen Fühlern, einem Display zur Anzeige der Messung (5), einem Schalter (6), einer Betriebselektronik und einem Fach (7) mit Abdeckung (8) für Batterien zur Spannungsversorgung besteht.

2. Wickelauflage gemäß Anspruch 1 **dadurch gekennzeichnet, dass** das Display (5) und/oder der Schalter (6) in einem oder mehreren, dicker ausgeführten Seitenbereichen (4) des Bestandteils (2) angeordnet ist.

3. Wickelauflage gemäß Anspruch 1 **dadurch gekennzeichnet, dass** die Abdeckung (8) des Batteriefachs von der Unterseite des Bestandteils (2) aus zugänglich ist.

4. Wickelauflage gemäß Anspruch 1 **dadurch gekennzeichnet, dass** der Bestandteil aus gepolstertem Material (2) eine tragende Verstärkung enthält.

## Revendications

1. Plan à langer (1) avec système de pesage composé d'une partie (2) de matériel matelassé en particulier complétée d'une zone centrale (3) en léger renfoncement par rapport à des côtés plus épais (4); **caractérisé en ce que** la partie matelassée (2) comporte un système numérique de mesure du poids, consistant en des capteurs, un écran de visualisation de la mesure (5), un interrupteur (6), un dispositif électronique de fonctionnement et un logement (7) pourvu d'une trappe (8) pour les piles d'alimentation.

2. Plan à langer, selon la revendication 1, **caractérisé en ce que** l'écran (5) et/ou l'interrupteur (6) sont disposés sur une ou plusieurs des zones latérales plus épaisses (4) de la partie centrale (2).

3. Plan à langer, selon la revendication 1, **caractérisé en ce que** la trappe du logement des piles (8) est accessible par la partie inférieure de la partie matelassée (2).

4. Plan à langer, selon la revendication 1, **caractérisé en ce que** la partie de matériel matelassé (2) comporte un support portant.
